# EUROPEAN PATENT APPLICATION

(11) **EP 4 509 984 A1**
(43) Date of publication of application: **19.02.2025**
(21) Application number: 23787375.7
(22) Date of filing: 02.02.2023
(51) Int. Cl.: G06F 9/451, G06F 9/54

(54) **TASK PROCESSING METHOD AND APPARATUS**

(30) Priority: 12.04.2022 CN 202210380201
(71) Applicant: Beijing Jingdong Qianshi Technology Co., Ltd., Beijing 100176 (CN)
(72) Inventor: SHAO, Zhangying, Beijing 100176 (CN); CHEN, Mingsong, Beijing 100176 (CN); NI, Fujia, Beijing 100176 (CN)
(74) Representative: FDST Patentanwälte
(86) International application number: PCT/CN2023/074252
(87) International publication number: WO 2023/197727

(57) **Abstract**

The present disclosure provides a task processing method and apparatus, and relates to the field of computer technology. A specific embodiment of the method comprises: receiving a task request, and acquiring idle temporary-storage position information of a workstation shelf, so as to obtain a first code and a second code of the temporary-storage position that have a mapping relationship; updating corresponding temporary-storage position display information in a visual operation interface according to the first code, and generating a cargo placement task and sending the same to a transport device according to the second code and the task request; in response to a container corresponding to the cargo placement task being transported to the temporary-storage position, updating the temporary-storage position display information in the visual operation interface according to the first code corresponding to the second code in the cargo placement task; and determining a cargo pickup quantity corresponding to the container according to the task request, executing a cargo pickup program, and updating the temporary-storage position display information in the visual operation interface according to the first code after cargo pickup is completed. Therefore, the embodiment of the present disclosure can solve the problems of a low operating efficiency and a high cost of the existing CTU operating modes.

## Description

### CROSS-REFERENCE TO RELATED APPLICATION

The present application claims priority from the Chinese Patent Application No. 202210380201.3 entitled "TASK PROCESSING METHOD AND APPARATUS" and filed on Apr. 12, 2022, the contents of which are cited in full herein as part or all of the present application.

### TECHNICAL FIELD

The present disclosure relates to the field of computer technology, in particular to a task processing method and apparatus.

### BACKGROUND

At present, CTU, also known as multi-layer box handling AGV (AGV is a transport device equipped with an electromagnetic or optical automatic navigation device, which can travel along a specified navigation path and has safety protection and various transfer functions), can carry multiple boxes at a time and place the boxes at different heights. CTU Operating Modes: One is a workstation based on a conveyor line device (the workstation is an operating area in the warehouse, which usually has an operating point consisting of shelves and computers), that is, the CTU takes containers and puts them on a conveyor line, which then transfers them to a certain operating point for operations (shelving, picking, stocktaking, etc.), and after the operations are completed, they are conveyed to a CTU cargo taking position via the conveyor line; the other is a workstation where the CTU takes boxes and places them on ordinary multi-layer shelves, and on-site personnel perform operations based on the boxes already placed on the shelves.

In the process of implementing the present disclosure, the inventors have found that there are at least the following problems in the existing art:
The existing CTU operating modes have a single line for the conveyor line device, lack a necessary visual interface operation and have a phenomenon of box queuing, so they have a high operating cost and a low operating efficiency.

### SUMMARY

In view of this, embodiments of the present disclosure provide a task processing method and apparatus, which can solve the problems of a low operating efficiency and a high cost of the existing CTU operating modes.

In order to accomplish the above object, according to one aspect of the embodiments of the present disclosure, a task processing method is provided, comprising: receiving a task request, and acquiring idle temporary-storage position information of a workstation shelf, so as to obtain a first code and a second code of the temporary-storage position that have a mapping relationship; updating corresponding temporary-storage position display information in a preset visual operation interface according to the first code, and generating a cargo placement task and sending the same to a transport device according to the second code and the task request; in response to a container corresponding to the cargo placement task being transported to the temporary-storage position, updating the temporary-storage position display information in the visual operation interface according to the first code corresponding to the second code in the cargo placement task; and determining a cargo pickup quantity corresponding to the container according to the task request, executing a cargo pickup program, and updating the temporary-storage position display information in the visual operation interface according to the first code after cargo pickup is completed.

According to one or more embodiments of the present disclosure, there are further comprised: in response to the execution of the cargo pickup program being completed, generating a cargo taking task and sending the same to the transport device according to the second code; and in response to the cargo taking task of the transport device being completed, updating the temporary-storage position display information in the visual operation interface according to the first code corresponding to the second code in the cargo taking task.

According to one or more embodiments of the present disclosure, after receiving the task request, there are comprised:
acquiring current configuration information of the workstation shelf, and
judging whether there is a temporary-storage position with an idle status;
   if it is determined that there is a temporary-storage position with an idle status, judging whether a preset waiting queue includes the task request, and if it is determined that a preset waiting queue includes the task request, pulling the task request in the waiting queue and putting a currently received task request into the waiting queue; if if it is determined that a preset waiting queue does not include the task request, executing the currently received task request; and
   if it is determined that there is not a temporary-storage position with an idle status, putting the currently received task request into the preset waiting queue.

According to one or more embodiments of the present disclosure, after receiving the task request, there are further comprised:
identifying a task type according to the task request, so as to acquire corresponding attribute information based on the task type; and generating a cargo placement task according to the attribute information and the second code.

According to one or more embodiments of the present disclosure, there are further comprised: monitoring that text information exists in an input box corresponding to the first code in the visual operation interface; and identifying the text information, and determining a corresponding execution program, so as to process the temporary-storage position having the first code.

According to one or more embodiments of the present disclosure, there are further comprised: in response to selecting an operation control corresponding to the first code in the visual operation interface, identifying a type of the operation control, and acquiring a corresponding operation program; and judging whether there are multiple operation programs, and if it is determined that there are multiple operation programs, processing the temporary-storage position having the first code in response to the selected operation program; if it is determined that there are not multiple operation programs, executing the operation program to process the temporary-storage position having the first code.

According to one or more embodiments of the present disclosure, there is comprised: providing the workstation shelf with front and rear sides, and configuring the front and rear sides of each temporary-storage position on the workstation shelf with corresponding first and second codes, respectively.

Besides, the present disclosure also provides a task processing apparatus, comprising: an acquisition module for receiving a task request, and acquiring idle temporary-storage position information of a workstation shelf, so as to obtain a first code and a second code of the temporary-storage position that have a mapping relationship; and a processing module for updating corresponding temporary-storage position display information in a preset visual operation interface according to the first code, and generating a cargo placement task and sending the same to a transport device according to the second code and the task request; in response to a container corresponding to the cargo placement task being transported to the temporary-storage position, updating the temporary-storage position display information in the visual operation interface according to the first code corresponding to the second code in the cargo placement task; and determining a cargo pickup quantity corresponding to the container according to the task request, executing a cargo pickup program, and updating the temporary-storage position display information in the visual operation interface according to the first code after cargo pickup is completed.

One embodiment of the above disclosure has the following advantages or beneficial effects:
The present disclosure uses multi-layer shelves formed by front and rear coding to perform visual operations on multi-layer temporary-storage containers, thereby solving the problem of finding containers during the operations and realizing on-site operations without the need to determine container numbers, and utilizes simple position coding operations to support visual operations on container positions so as to improve the efficiency of the on-site operations.

The further effects of the above-mentioned non-conventional optional modes will be described below in conjunction with specific embodiments.

### DESCRIPTION OF THE DRAWINGS

The figures are used for a better understanding of the present disclosure, and do not constitute improper limitations to the present disclosure, wherein:
Fig. 1 is a schematic diagram of a main flow of a task processing method according to a first embodiment of the present disclosure;
Fig. 2 is a structural schematic diagram of a workstation shelf according to an embodiment of the present disclosure;
Fig. 3 is a schematic diagram of a visual operation interface marked as a warehousing task according to an embodiment of the present disclosure;
Fig. 4 is a schematic diagram of a visual operation interface marked as a warehouse-out task according to an embodiment of the present disclosure;
Fig. 5 is a schematic diagram of a main flow of a task processing method according to a second embodiment of the present disclosure;
Fig. 6 is a schematic diagram of main modules of a task processing apparatus according to an embodiment of the present disclosure;
Fig. 7 is an exemplary system architecture diagram in which the embodiments of the present disclosure can be applied;
Fig. 8 is a structural schematic diagram of a computer system suitable for implementing a terminal device or a server according to an embodiment of the present disclosure.

### DESCRIPTION OF THE EMBODIMENTS

Hereinafter, the exemplary embodiments of the present disclosure are described with reference to the figures, wherein various details of the embodiments of the present disclosure are included to facilitate the understanding, and the embodiments of the present invention should be considered as only exemplary ones. Therefore, those skilled in the art should recognize that various changes and modifications may be made to the embodiments described herein without departing from the scope and spirit of the present disclosure. Also, descriptions of well-known functions and structures are omitted hereinafter for clarity and conciseness.

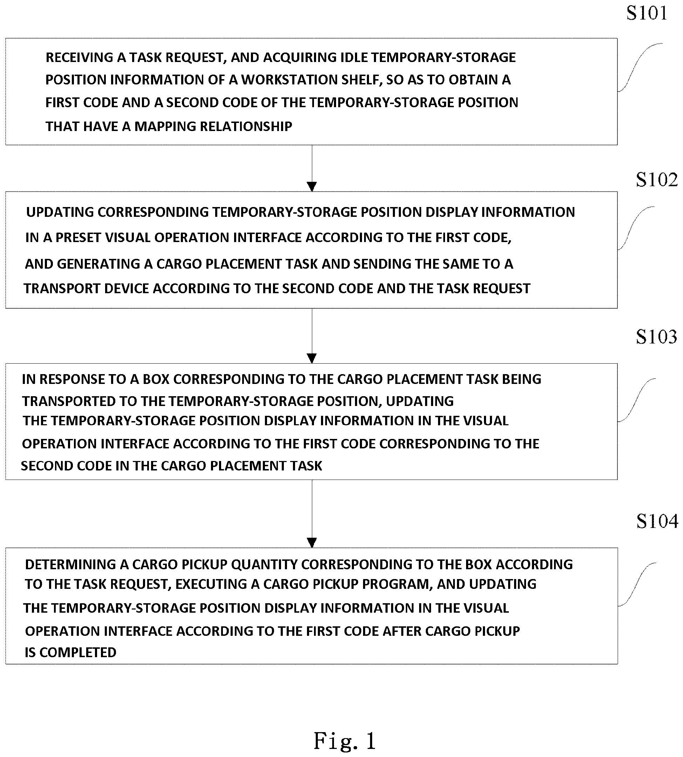

Fig. 1 is a schematic diagram of a main flow of a task processing method according to a first embodiment of the present disclosure. As shown in Fig. 1, the task processing method comprises:
Step S101: receiving a task request, and acquiring idle temporary-storage position information of a workstation shelf, so as to obtain a first code and a second code of the temporary-storage position that have a mapping relationship.

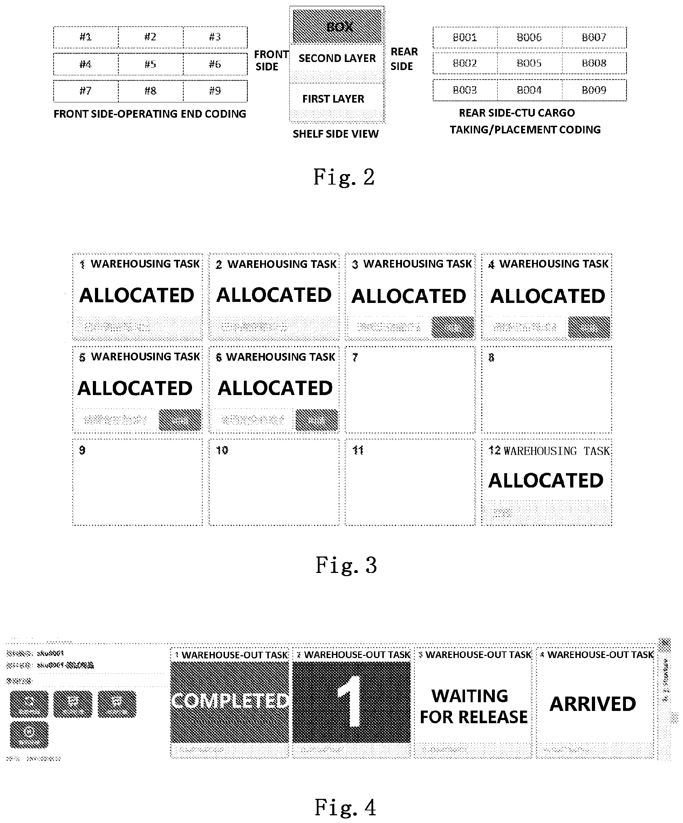

In the embodiment, as shown in Fig. 2, the workstation shelf is arranged in multiple layers and has front and rear sides, and the front and rear sides of each temporary-storage position on the workstation shelf are configured with corresponding first and second codes, respectively. For example, the side of the workstation shelf facing the warehouse is defined as the rear side, and the rear side of each temporary-storage position is configured with a second code for identification by a CTU device; the side of the workstation shelf facing the operation direction is defined as the front side, and the front side of each temporary-storage position is configured with a first code for use in on-site operations. The first code and the second code of each temporary-storage position are unique, and a mapping relationship is configured between the second code defining the rear side and the first code defining the front side, i.e., establishing a relationship R, e.g., R1 (#1, B001), R2 (#2, B006). In addition, the workstation shelf, each layer of which can be divided into multiple columns, which is specifically determined by the length of the shelf and the width of the container, is physically divided into several equal-sized temporary-storage positions according to the layers and columns. For example, the main body of the shelf consists of 3 layers, and each layer is divided into 3 columns, i.e., a total of 9 temporary-storage positions.

In some embodiments, after receiving the task request, current configuration information of the workstation shelf can be acquired (for example, acquiring whether a status indicator in the configuration information is idle) to judge whether there is a temporary-storage position with an idle status. If it is determined that there is a temporary-storage position with an idle status, judge whether a preset waiting queue includes the task request (that is, if there is an idle temporary-storage position, first process the task request in the waiting queue), and if it is determined that a preset waiting queue includes the task request, pull the task request in the waiting queue and put a currently received task request into the waiting queue; if it is determined that a preset waiting queue does not include the task request, execute the currently received task request. If it is determined that there is not a temporary-storage position with an idle status, put the currently received task request into the preset waiting queue, that is, if there is no idle temporary-storage position at present, you may queue in the waiting queue.

Step S102: updating corresponding temporary-storage position display information in a preset visual operation interface according to the first code, and generating a cargo placement task and sending the same to a transport device according to the second code and the task request.

In the embodiment, the present disclosure is creatively provided with a visual operation interface:
As shown in Figs. 3 (the task type is a warehousing task) and 4 (the task type is a warehouse-out task), the visual operation interface is divided into multiple equal positions according to the temporary-storage positions of the actual workstation shelves. For example, there are 3 layers in total and 4 columns in each layer, and the number corresponds to the first code of the temporary-storage position. For each corresponding temporary-storage position, the visual operation interface area is divided into an upper, middle and lower three-layer structure. The leftmost portion of the upper layer is the first code, the middle portion of the upper layer is the task description or other prompts, and the middle layer is specifically a prompt of the container's handling status, which can provide a double-click event. The lower layer is an operation area including an input box and operation buttons; the input box can be used to bind empty boxes and input data required by other businesses such as text, while the operation buttons can provide operations for the current temporary-storage position, e.g., calling an empty box operation in the warehouse. Besides, the visual operation interface can be connected to the temporary-storage position, monitor the container for operations, display multiple containers at the same time, and operate multiple boxes, so as to greatly improve the operating efficiency.

In some embodiments, the present disclosure can identify a task type according to the task request, so as to acquire corresponding attribute information based on the task type. Then, a cargo placement task can be generated according to the attribute information and the second code. For example, the task type can be identified as a warehousing task or a warehouse-out task according to the task request. Target attributes are configured correspondingly based on different task types (i.e., a warehousing task or a warehouse-out task), respectively, and corresponding attribute information is acquired according to the target attributes. The attribute information can be used to generate a cargo placement task. For example, the warehouse-out task needs to acquire warehouse container addresses according to the target attributes. As can be seen, the present disclosure can be adapted to CTU operations in any scene.

Step S103: in response to a container corresponding to the cargo placement task being transported to the temporary-storage position, updating the temporary-storage position display information in the visual operation interface according to the first code corresponding to the second code in the cargo placement task.

Step S104: determining a cargo pickup quantity corresponding to the container according to the task request, executing a cargo pickup program, and updating the temporary-storage position display information in the visual operation interface according to the first code after cargo pickup is completed.

In some embodiments, after executing step S104, the picked items or the containers in the temporary-storage position may also be taken away according to the actual task processing requirements. The specific implementation process includes: in response to the execution of the cargo pickup program being completed, generating a cargo taking task and sending the same to the transport device according to the second code. Finally, in response to the cargo taking task of the transport device being completed, the temporary-storage position display information in the visual operation interface is updated according to the first code corresponding to the second code in the cargo taking task.

As some other embodiments, if it is monitored that text information exists in an input box corresponding to the first code in the visual operation interface, the text information can be identified and a corresponding execution program can be determined to process the temporary-storage position having the first code. As can be seen, the present disclosure can input operation instructions through the visual operation interface, automatically identify the operation content, and call the corresponding execution program to process the temporary-storage position, e.g., reviewing the items in the temporary-storage position container.

As some further embodiments, the present disclosure may also directly perform targeted operations through the visual operation interface, for example, directly clicking on a regional call control with a first code number of 2 corresponding to the visual operation interface. The specific implementation process includes: in response to selecting an operation control corresponding to the first code in the visual operation interface, identifying a type of the operation control, and acquiring a corresponding operation program. Then, whether there are multiple operation programs is judged, wherein if it is determined that there are multiple operation programs is judged, process the temporary-storage position having the first code in response to the selected operation program; if it is determined that there are not multiple operation programs is judged, execute the operation program to process the temporary-storage position having the first code. For example, in response to clicking a call control event with a first code number of 2, a SMS sending operation program and an email sending operation program are acquired; in response to selecting the SMS sending operation program, an empty container calling SMS is generated for the temporary-storage position with a first code number of 2 and sent to the transport device.

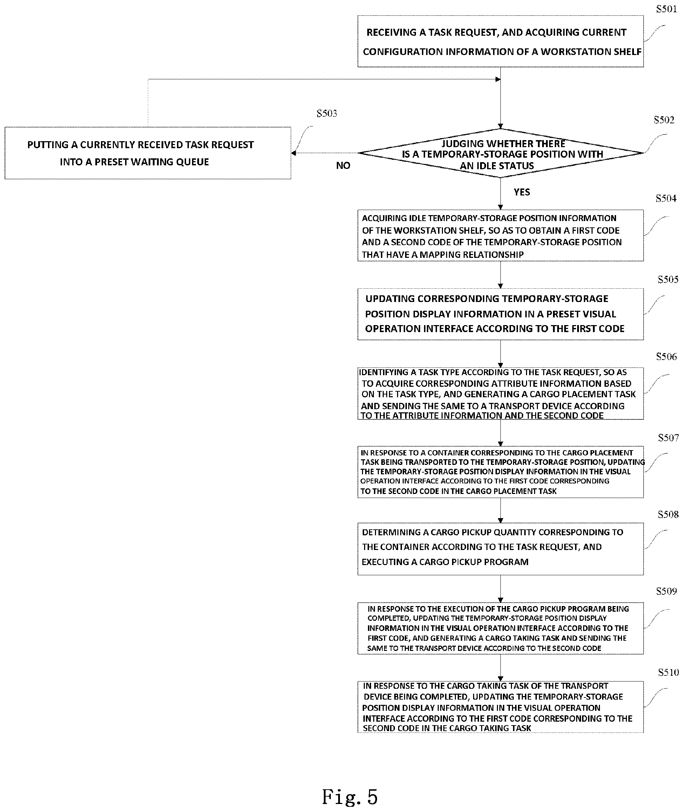

Fig. 5 is a schematic diagram of a main flow of a task processing method according to a second embodiment of the present disclosure. As shown in Fig. 5, the task processing method comprises:
Step S501: receiving a task request, and acquiring current configuration information of a workstation shelf.
Step S502: judging whether there is a temporary-storage position with an idle status, wherein if it is determined that there is a temporary-storage position with an idle status, proceed to step S504, and if it is determined that there is not a temporary-storage position with an idle status, proceed to step S503.
Step S503: putting a currently received task request into a preset waiting queue, and returning to step S502.
Step S504: acquiring idle temporary-storage position information of the workstation shelf, so as to obtain a first code and a second code of the temporary-storage position that have a mapping relationship.
Step S505: updating corresponding temporary-storage position display information in a preset visual operation interface according to the first code.

For example, an idle temporary-storage position with a first code number of 2 is allocated and occupied in the preset visual operation interface, the task type is displayed as a warehouse-out task at No. 2 and is bolded in black, and "Allocated" is displayed in the middle view (the background color is white).

Step S506: identifying a task type according to the task request, so as to acquire corresponding attribute information based on the task type, and generating a cargo placement task and sending the same to a transport device according to the attribute information and the second code.

Step S507: in response to a container corresponding to the cargo placement task being transported to the temporary-storage position, updating the temporary-storage position display information in the visual operation interface according to the first code corresponding to the second code in the cargo placement task.

For example, the display information is updated to "Arrived" in the middle view with a first code number of 2 of the preset visual operation interface (the background color is white), and the currently arrived container information is prompted in the view below (gray is uneditable).

Step S508: determining a cargo pickup quantity corresponding to the container according to the task request, and executing a cargo pickup program.

For example, the cargo pickup quantity that the current containers need to operate is highlighted on the preset visual operation interface according to the task request, with the font being white and the background being red.

Step S509: in response to the execution of the cargo pickup program being completed, updating the temporary-storage position display information in the visual operation interface according to the first code, and generating a cargo taking task and sending the same to the transport device according to the second code.

For example, the display information is updated to "Cargo Pickup Completed" in the middle view with a first code number of 2 of the preset visual operation interface (the background color is white).

Step S510: in response to the cargo taking task of the transport device being completed, updating the temporary-storage position display information in the visual operation interface according to the first code corresponding to the second code in the cargo taking task.

For example, after the CTU completes the cargo taking, the display information is updated to "Task Completed" in the middle view with a first code number of 2 of the visual operation interface, with the font being white and the background being green.

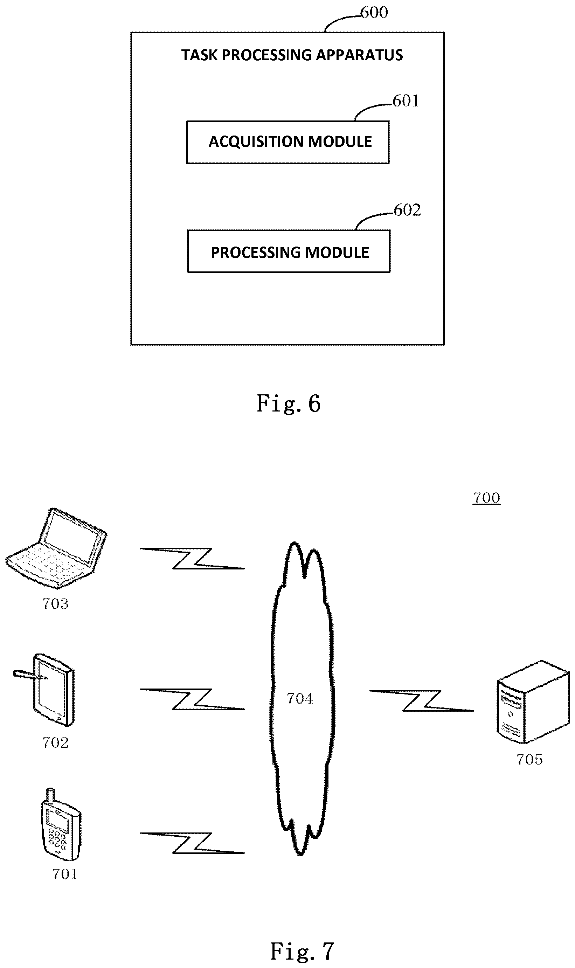

Fig. 6 is a schematic diagram of main modules of a task processing apparatus according to an embodiment of the present disclosure. As shown in Fig. 6, the task processing apparatus 600 comprises an acquisition module 601 and a processing module 602. The acquisition module 601 receives a task request, and acquires idle temporary-storage position information of a workstation shelf, so as to obtain a first code and a second code of the temporary-storage position that have a mapping relationship. The processing module 602 updates corresponding temporary-storage position display information in a preset visual operation interface according to the first code, and generates a cargo placement task and sends the same to a transport device according to the second code and the task request; in response to a container corresponding to the cargo placement task being transported to the temporary-storage position, updates the temporary-storage position display information in the visual operation interface according to the first code corresponding to the second code in the cargo placement task; and determines a cargo pickup quantity corresponding to the container according to the task request, executes a cargo pickup program, and updates the temporary-storage position display information in the visual operation interface according to the first code after cargo pickup is completed.

In some embodiments, the processing module 602 is also used for:
in response to the execution of the cargo pickup program being completed, generating a cargo taking task and sending the same to the transport device according to the second code; and
in response to the cargo taking task of the transport device being completed, updating the temporary-storage position display information in the visual operation interface according to the first code corresponding to the second code in the cargo taking task.

In some embodiments, after the acquisition module 601 receives the task request, there are comprised:
acquiring current configuration information of the workstation shelf, and judging whether there is a temporary-storage position with an idle status; if it is determined that there is a temporary-storage position with an idle status, judging whether a preset waiting queue includes the task request, and if it is determined that a preset waiting queue includes the task request, pulling the task request in the waiting queue and putting a currently received task request into the waiting queue; if if it is determined that a preset waiting queue does not include the task request, executing the currently received task request; and if it is determined that there is not a temporary-storage position with an idle status there is a temporary-storage position with an idle status, putting the currently received task request into the preset waiting queue.

In some embodiments, after the acquisition module 601 receives the task request, there is further comprised: identifying a task type according to the task request, so as to acquire corresponding attribute information based on the task type.

The processing module 602 is also used for: generating a cargo placement task according to the attribute information and the second code.

In some embodiments, the processing module 602 is further used for:
monitoring that text information exists in an input box corresponding to the first code in the visual operation interface; and identifying the text information, and determining a corresponding execution program, so as to process the temporary-storage position having the first code.

In some embodiments, the processing module 602 is further used for:
in response to selecting an operation control corresponding to the first code in the visual operation interface, identifying a type of the operation control, and acquiring a corresponding operation program; and
judging whether there are multiple operation programs, and if it is determined that there are multiple operation programs, processing the temporary-storage position having the first code in response to the selected operation program; if it is determined that there are not multiple operation programs, executing the operation program to process the temporary-storage position having the first code.

In some embodiments, the workstation shelf is provided with front and rear sides, and the front and rear sides of each temporary-storage position on the workstation shelf are configured with corresponding first and second codes, respectively.

It should be noted that the task processing method and the task processing apparatus according to the present disclosure have a correspondence relationship in the specific implementation, so the repeated contents are no longer described.

Fig. 7 shows an exemplary system architecture 700 in which the task processing method or the task processing apparatus according to the embodiments of the present disclosure can be applied.

As shown in Fig. 7, the system architecture 700 may include terminal devices 701, 702, 703, a network 704, and a server 705. The network 704 is used to provide a communication link medium between the terminal devices 701, 702, 703 and the server 705. The network 704 may include various connection types, such as wired and wireless communication links, fiber optic cables, etc.

The user can use the terminal devices 701, 702, 703 to interact with the server 705 via the network 704 to receive or send messages, etc. Various communication client applications may be installed on the terminal devices 701, 702, 703.

The terminal devices 701, 702, 703 may be various electronic devices that have a task processing screen and support web browsing, including but not limited to smart phones, tablet computers, laptop computers, desktop computers, and so on.

The server 705 may be a server that provides various services, for example, a back-end management server that provides support for users using the terminal devices 701, 702, 703 (which is only an example). The back-end management server can subject the received data such as a product information query request to processing such as analysis, and feed the processing results (such as target push information and product information, which are only examples) back to the terminal devices.

It should be noted that the task processing method as provided by the embodiment of the present disclosure is generally executed by the server 705, and, accordingly, the calculating device is generally provided in the server 705.

It should be understood that the numbers of the terminal device, the network and the server in Fig. 7 are only illustrative. According to implementation needs, there may be any numbers of the terminal device, the network and the server.

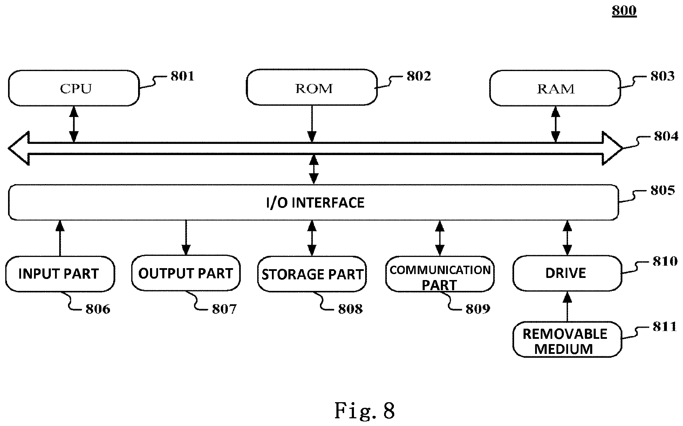

Referring now to Fig. 8, it shows a structural schematic diagram of a computer system 800 suitable for implementing a terminal device according to an embodiment of the present disclosure. The terminal device shown in Fig. 8, which is only an example, should not bring any limitation to the function and use scope of the embodiment of the present disclosure.

As shown in Fig. 8, the computer system 800 includes a central processing unit (CPU) 801, which can perform various appropriate actions and processes according to a program stored in a read-only memory (ROM) 802 or a program loaded from a storage part 808 into a random access memory (RAM) 803. Various programs and data required for the operation of the computer system 800 are also stored in the RAM 803. The CPU 801, the ROM 802, and the RAM 803 are connected to each other through a bus 804. An input/output (I/O) interface 805 is also connected to the bus 804.

The following components are connected to the I/O interface 805: an input part 806 including a keyboard, a mouse and the like; an output part 807 including a cathode ray tube (CRT), a liquid crystal task processor (LCD), a speaker and the like; a storage part 808 including a hard disk and the like; and a communication part 809 including a network interface card such as a LAN card, a modem and the like. The communication part 809 performs communication processing via a network such as the Internet. A drive 810 is also connected to the I/O interface 805 as required. A removable medium 811, such as a magnetic disk, an optical disk, a magneto-optical disk, a semiconductor memory or the like, is installed on the drive 810 as required, so that the computer program read from it is installed into the storage part 808 as required.

In particular, according to the embodiment disclosed in the present disclosure, the process described above with reference to the flowchart may be implemented as a computer software program. For example, the embodiment of the present invention includes a computer program product, which includes a computer program carried on a computer-readable medium, and the computer program contains a program code for executing the method shown in the flowchart. In such an embodiment, the computer program may be downloaded and installed from the network through the communication part 809, and/or installed from the removable medium 811. When the computer program is executed by the central processing unit (CPU) 801, the above-mentioned functions defined in the system of the present disclosure are executed.

It should be noted that the computer-readable medium shown in the present invention may be a computer-readable signal medium or a computer-readable storage medium, or any combination of the above two. The computer-readable storage medium may be, for example, but not limited to, an electrical, magnetic, optical, electromagnetic, infrared or semiconductor system, device or device, or a combination of any of the above. More specific examples of the computer-readable storage medium may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present invention, the computer-readable storage medium may be any tangible medium that contains or stores a program, and the program may be used by or in combination with an instruction execution system, apparatus or device. Moreover, in the present invention, the computer-readable signal medium may include a data signal propagated in baseband or as a part of a carrier wave, in which a computer-readable program code is carried. The propagated data signal can take many forms, including but not limited to an electromagnetic signal, an optical signal, or any suitable combination of the above. The computer-readable signal medium may also be any computer-readable medium other than the computer-readable storage medium, and the computer-readable medium can send, propagate, or transmit a program used by or in combination with an instruction execution system, apparatus or device. The program code contained on the computer-readable medium can be transmitted by any suitable medium, including but not limited to: wireless, wire, optical cable, RF and the like, or any suitable combination of the above.

The flowcharts and block diagrams in the drawings illustrate possible system architectures, functions and operations of the system, method and computer program product according to various embodiments of the present disclosure. **In** this regard, each block in the flowcharts or block diagrams can represent a module, a program segment or a part of a code, which contains one or more executable instructions for realizing the specified logic function. It should also be noted that, in some alternative implementations, the functions marked in the blocks may also occur in a different order from that marked in the drawings. For example, two blocks shown in succession can actually be executed substantially in parallel, and they can sometimes be executed in a reverse order, depending on the functions involved. It should further be noted that each block in the block diagrams or flowcharts, and the combination of blocks in the block diagrams or flowcharts can be implemented by a dedicated hardware-based system that performs the specified functions or operations, or can be implemented by a combination of dedicated hardware and computer instructions.

The modules involved in the embodiments described in the present disclosure can be implemented by software or hardware. The described modules can also be provided in a processor, which, for example, can be described as: a processor including an acquiring module and a processing module. Herein, the names of these modules do not constitute limitations to the modules themselves under certain circumstances.

As another aspect, the present disclosure also provides a computer-readable medium, which may be included in the device described in the above embodiment or may exist alone without being assembled into the device. The above computer-readable medium carries one or more programs that, when executed by a device, cause the device to include: receiving a task request, and acquiring idle temporary-storage position information of a workstation shelf, so as to obtain a first code and a second code of the temporary-storage position that have a mapping relationship; updating corresponding temporary-storage position display information in a preset visual operation interface according to the first code, and generating a cargo placement task and sending the same to a transport device according to the second code and the task request; in response to a container corresponding to the cargo placement task being transported to the temporary-storage position, updating the temporary-storage position display information in the visual operation interface according to the first code corresponding to the second code in the cargo placement task; and determining a cargo pickup quantity corresponding to the container according to the task request, executing a cargo pickup program, and updating the temporary-storage position display information in the visual operation interface according to the first code after cargo pickup is completed.

The technical solutions according to the embodiments of the present disclosure can solve the problems of a low operating efficiency and a high cost of the existing CTU operating modes.

The above specific embodiments do not constitute limitations to the scope of protection of the present disclosure. Those skilled in the art should understand that, depending on design requirements and other factors, various modifications, combinations, sub-combinations and replacements may occur. Any modifications, equivalent substitutions, improvements and the like made within the spirit and principle of the present disclosure shall be included in the scope of protection of the present disclosure.

## Claims

1. A task processing method, comprising:
receiving a task request, and acquiring idle temporary-storage position information of a workstation shelf, so as to obtain a first code and a second code of the temporary-storage position that have a mapping relationship;
updating corresponding temporary-storage position display information in a preset visual operation interface according to the first code, and generating a cargo placement task and sending the same to a transport device according to the second code and the task request;
in response to a container corresponding to the cargo placement task being transported to the temporary-storage position, updating the temporary-storage position display information in the visual operation interface according to the first code corresponding to the second code in the cargo placement task; and
determining a cargo pickup quantity corresponding to the container according to the task request, executing a cargo pickup program, and updating the temporary-storage position display information in the visual operation interface according to the first code after cargo pickup is completed.

2. The method according to claim 1, further comprising:
in response to the execution of the cargo pickup program being completed, generating a cargo taking task and sending the same to the transport device according to the second code; and
in response to the cargo taking task of the transport device being completed, updating the temporary-storage position display information in the visual operation interface according to the first code corresponding to the second code in the cargo taking task.

3. The method according to claim 1, which, after receiving the task request, comprises:
acquiring current configuration information of the workstation shelf, and judging whether there is a temporary-storage position with an idle status;
if it is determined that there is a temporary-storage position with an idle status, judging whether a preset waiting queue includes the task request, and if it is determined that a preset waiting queue includes the task request, pulling the task request in the waiting queue and putting a currently received task request into the waiting queue; if it is determined that a preset waiting queue does not include the task request, executing the currently received task request; and
if it is determined that there is not a temporary-storage position with an idle status, putting the currently received task request into the preset waiting queue.

4. The method according to claim 1, which, after receiving the task request, further comprises:
identifying a task type according to the task request, so as to acquire corresponding attribute information based on the task type; and
generating a cargo placement task according to the attribute information and the second code.

5. The method according to claim 1, further comprising:
monitoring that text information exists in an input box corresponding to the first code in the visual operation interface; and
identifying the text information, and determining a corresponding execution program, so as to process the temporary-storage position having the first code.

6. The method according to claim 1, further comprising:
in response to selecting an operation control corresponding to the first code in the visual operation interface, identifying a type of the operation control, and acquiring a corresponding operation program; and
judging whether there are multiple operation programs, and if it is determined that there are multiple operation programs, processing the temporary-storage position having the first code in response to the selected operation program; if it is determined that there are not multiple operation programs, executing the operation program to process the temporary-storage position having the first code.

7. The method according to any one of claims 1 to 6, comprising:
providing the workstation shelf with front and rear sides, and configuring the front and rear sides of each temporary-storage position on the workstation shelf with corresponding first and second codes, respectively.

8. A task processing apparatus, comprising:
an acquisition module for receiving a task request, and acquiring idle temporary-storage position information of a workstation shelf, so as to obtain a first code and a second code of the temporary-storage position that have a mapping relationship; and
a processing module for
updating corresponding temporary-storage position display information in a preset visual operation interface according to the first code, and generating a cargo placement task and sending the cargo placement task to a transport device according to the second code and the task request;
in response to a container corresponding to the cargo placement task being transported to the temporary-storage position, updating the temporary-storage position display information in the visual operation interface according to the first code corresponding to the second code in the cargo placement task; and
determining a cargo pickup quantity corresponding to the container according to the task request, executing a cargo pickup program, and updating the temporary-storage position display information in the visual operation interface according to the first code after cargo pickup is completed.

9. An electronic device, comprising:
one or more processors; and
a storage device for storing one or more programs that, when executed by the one or more processors, cause the one or more processors to implement the method according to any one of claims 1 to 7.

10. A computer-readable medium having a computer program stored thereon that, when executed by a processor, implements the method according to any one of claims 1 to 7.
